(19) Europäisches Patentamt
European Patent Office
Office européen des brevets

(11) Numéro de publication : **0 200 660 B1**

# (12) FASCICULE DE BREVET EUROPÉEN

(45) Date de publication du fascicule du brevet : **20.09.89**

(51) Int. Cl.[4] : **G 01 L 3/24**, G 01 M 17/00

(21) Numéro de dépôt : **86420108.2**

(22) Date de dépôt : **24.04.86**

## (54) Procédé de mesure de la puisance disponible à bord d'un véhicule automobile.

(30) Priorité : **29.04.85 FR 8506698**

(43) Date de publication de la demande :
**05.11.86 Bulletin 86/45**

(45) Mention de la délivrance du brevet :
**20.09.89 Bulletin 89/38**

(84) Etats contractants désignés :
**AT BE CH DE GB IT LI LU NL SE**

(56) Documents cités :
**DE-A- 2 339 580**
**DE-A- 2 800 236**
**US-A- 3 693 426**
**29TH IEEE VEHICULAR TECHNOLOGY CONFERENCE, Arlington Heights, Illinois, US, 27-30 mars 1979, pages 154-157, IEEE, New York, US; D.K. LYNN et al.: "Microprocessor-based system for roll-down and acceleration tests"**
**INGENIEURS DE L'AUTOMOBILE, no. 5, juin-juillet-août 1980, pages 16-22, Boulogne, FR; M.J. JACQUET: "Détermination des paramètres de la résistance à l'avancement des véhicules industriels par une méthode de décélération en site contrôlé"**

(73) Titulaire : **CENTRE DE RECHERCHE EN MACHINES THERMIQUES C.R.M.T. Société à Responsabilité Limitée:**
**64, Chemin des Mouilles**
**F-69130 Ecully (FR)**

(72) Inventeur : **Haupais, Alain**
**2, Allée de la Creuzette**
**F-69890 La Tour de Salvagny (FR)**
Inventeur : **Blanc, Jacques**
**4, rue Clément**
**F-69130 Ecully (FR)**
Inventeur : **Zellat, Mohammed**
**45, rue Saint-Maurice**
**F-69008 Lyon (FR)**

(74) Mandataire : **Ropital-Bonvarlet, Claude et al**
**Cabinet BEAU DE LOMENIE 99, Grande rue de la Guillotière**
**F-69007 Lyon (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un procédé de mesure de la puissance disponible à bord d'un véhicule automobile.

Lorsque l'on désire mesurer les courbes de couple et de puissance délivrés par un moteur de véhicule, il est possible de démonter le moteur pour effectuer des mesures sur banc d'essai. Cette méthode permet d'obtenir des résultats fiables, encore que le moteur ne soit pas dans son cadre de fonctionnement habituel, mais est peu commode et lente du fait de la nécessité de procéder à un démontage puis à un remontage du moteur.

On a également proposé de placer le véhicule sur un banc à rouleaux. Dans ce cas, les roues du véhicule reposent sur des rouleaux soumis à un freinage. Il est possible dans ces conditions, dans la mesure où l'on connaît les efforts de freinage appliqués, d'effectuer des mesures de puissance et de couple. Cette solution est cependant onéreuse compte tenu de la nécessité de réaliser un banc à rouleaux spécialement adapté pour ce type de mesure.

Selon une autre solution possible, des jantes dynamométriques sont placées sur les plateaux de fixation de roue du véhicule. Le couple exercé peut être déterminé à partir de mesures faites par des jauges de contraintes incorporées dans lesdites jantes. Un tel système est également complexe à mettre en oeuvre et ne peut être universel compte tenu des différents systèmes de fixation de roues existants qui impliquent de prévoir différents types de jantes dynamométriques.

On connaît, également d'après l'article de LYNN et al. (29TH IEEE Vehicular Technology Conference, Arlington Heights, Illinois, U. S. A. - 27-30 mars 1979, pages 154-157) quelques principes généraux de mesure des performances pour des véhicules soumis à des tests sur route. L'article mentionne que la performance en ligne droite est caractérisée par la puissance disponible aux roues, par la résistance au roulement, par la traînée aérodynamique et par des facteurs externes, tels le vent et la pente de la route. Il est, ensuite, simplement indiqué que la puissance disponible peut être déterminée à partir d'un test d'accélération avec le papillon d'accélération grand ouvert et que la résistance au roulement et la traînée aérodynamique sont obtenues par des tests effectués en descente. Les principes généraux, ainsi relevés, ne fournissent, cependant, pas les informations nécessaires à l'obtention pratique, rapide et fiable de la puissance disponible à bord d'un véhicule.

La présente invention vise à remédier aux inconvénients précités et à permettre une détermination aisée et peu coûteuse de la puissance et du couple disponibles dans un véhicule à moteur à boîte de vitesses manuelle, sans qu'il soit nécessaire de démonter le moteur du véhicule, ni d'installer le véhicule sur un banc de mesure complexe.

Ces buts sont atteints grâce à un procédé de mesure du type selon lequel on place le véhicule sur une route dans des conditions atmosphériques stables, on fait passer le véhicule d'une position de vitesse minimale à une position de vitesse maximale, lors d'une phase dite d'accélération, en actionnant à fond la commande d'accélérateur pour faire passer le moteur d'un régime minimal possible à un régime maximal autorisé, on interrompt l'actionnement de la commande d'accélérateur lorsque ledit régime maximal autorisé a été atteint, tout en plaçant la boîte de vitesse au point mort et on laisse décroîte la vitesse du véhicule en roue libre jusqu'à l'arrêt du véhicule lors d'une phase de décélération, caractérisé en ce que le procédé, permettant d'obtenir la puissance disponible à bord d'un véhicule automobile consiste, pour au moins un rapport de vitesse donné, à :

mesurer en permanence pendant la marche du véhicule, à l'aide d'un capteur embarqué dans le véhicule, la vitesse instantanée du véhicule, de manière à établir la courbe des vitesses instantanées mesurées,

procéder à un filtrage et à un lissage numériques des différentes valeurs instantanées de vitesses mesurées, de manière à obtenir une courbe lissée de vitesse en fonction du temps,

déduire de la courbe lissée de vitesse les accélérations instantanées du véhicule pendant les phases d'accélération et de décélération pour permettre l'établissement de la courbe des accélérations instantanées,

déterminer pour chaque vitesse instantanée, à partir de la courbe, des accélérations instantanées en phase de décélération, l'effort résistant appliqué au véhicule,

et, à partir de l'effort résistant déterminé précédemment, déduire de la courbe des accélérations instantanées en phase d'accélération, par différence et pour une vitesse donnée, la puissance effectivement transmise au véhicule par le moteur.

De façon plus particulière, pour la mesure des vitesses instantanées, on élabore un signal de base constitué par une succession d'impulsions émises à des intervalles de temps correspondant chacun à une même distance élémentaire prédéterminée parcourue par le véhicule et on enregistre la durée des différents intervalles de temps successifs qui sont proportionnels aux vitesses instantanées du véhicule.

Selon un premier mode de réalisation, le signal de base est émis par un capteur étalonné placé sur le câble du compteur de vitesse du véhicule, et est mis en forme pour délivrer des créneaux de pente et d'amplitude stables.

Selon un autre mode de réalisation possible, le signal de base est émis par un capteur étalonné placé dans le véhicule sur une roue, un arbre de transmission, le pont, l'arbre de sortie de boîte ou un pignon solidaire de cet arbre de sortie, et est mis en forme pour délivrer des créneaux de pente et d'amplitude stables.

Sur la courbe des vitesses instantanées mesurées, on procède à une identification du début et de la fin de la phase d'accélération correspondant respectivement à un régime moteur minimal retenu supérieur audit régime minimal possible, et à un régime moteur maximal retenu inférieur audit régime moteur maximal autorisé ayant donné lieu à la pointe de vitesse instantanée maximum, et on procède à une identification du début et de la fin de la phase de décélération correspondant respectivement auxdits régimes moteurs maximal et minimal retenus.

L'opération de lissage numérique comprend un premier lissage numérique passe-bas selon lequel la valeur d'un point donné est remplacée par une moyenne pondérée ou non de ce point et d'un nombre 2p de points qui l'encadrent, p étant un entier compris entre 1 et 3.

Selon un mode de réalisation possible, l'opération de lissage numérique comprend un lissage polynomial par tronçons avec raccordement de dérivées grâce à des éléments cubiques de haute précision de type Hermite.

Les termes d'inertie du véhicule comprennent la masse du véhicule déterminée par pesée, le moment d'inertie des roues et de la transmission estimé d'après la taille des pneumatiques et la masse des roues, et le moment d'inertie des pièces tournantes du moteur estimé d'après la cylindrée du moteur.

Avantageusement, la détermination du moment d'inertie des roues et de la transmission et du moment d'inertie des pièces tournantes du moteur est effectuée à partir de résultats d'essais correspondant à plusieurs mises en oeuvre successives du procédé pour le même véhicule dans des conditions identiques mais avec chaque fois un rapport de boîte de vitesse différent, l'estimation desdits moments d'inertie étant effectuée par une méthode d'itération minimisant les écarts de puissance obtenus au même régime sur des rapports de boîte de vitesse différents.

Selon un premier type de mise en oeuvre du procédé, on applique le signal de base constitué par une succession d'impulsions directement à une interface reliée à un ordinateur embarqué dans le véhicule, et le comptage des intervalles de temps entre les impulsions successives est fait directement par l'ordinateur qui stocke au fur et à mesure les données ainsi acquises.

Selon un autre type de mise en oeuvre du procédé on enregistre sur l'une des voies d'un appareil d'enregistrement et de lecture stéréophonique standard à bande magnétique ou à cassette, le signal de base constitué par une succession d'impulsions mises en forme et présentant un niveau adapté à la sensibilité de l'entrée dudit appareil, on enregistre sur l'autre voie de l'appareil d'enregistrement les signaux d'une horloge de référence, et les données ainsi stockées sont ensuite relues après la fin de l'essai à bord du véhicule, à l'aide du même appareil d'enregistrement et de lecture stéréophonique pour être appliquées, par l'intermédiaire d'une interface, à un ordinateur de traitement non embarqué dans le véhicule à tester.

D'autres caractéristiques et avantages de l'invention ressortiront de la description suivante de modes particuliers de réalisation de l'invention, donnés à titre d'exemples non limitatifs, en référence aux dessins annexés, sur lesquels :

la figure 1 est un chronogramme montrant des signaux issus d'un capteur et permettant de déterminer la vitesse du véhicule soumis à un essai,

les figures 2, 3 et 4 montrent des courbes donnant la vitesse du véhicule en fonction du temps établies à partir des signaux délivrés par le capteur de vitesse et à diverses phases de traitement des signaux délivrés par le capteur de vitesse,

la figure 5 montre la courbe donnant l'accélération du véhicule en fonction du temps, établie à partir de la courbe de vitesse de la figure 4,

la figure 6 montre les courbes donnant la puissance et le couple du moteur en fonction du régime du moteur, établies à partir de la courbe d'accélération de la figure 5, et

les figures 7A, 7B, et 7C correspondent respectivement aux figures 2, 5 et 6 mais avec une échelle des temps dilatée, et la figure 7C montre en outre la courbe de la puissance résistive en fonction du régime de moteur.

Sur un véhicule, la loi d'accélération en fonction du temps est fonction de l'effort moteur transmis aux roues, de l'effort résistant d'avancement du véhicule et de son inertie. Si les inerties et efforts résistants sont connus, on peut à partir d'une loi d'accélération mesurée, calculer à chaque instant l'effort de la puissance délivrés par le moteur.

Le procédé selon l'invention permet d'accéder à tous ces facteurs et de calculer la puissance effectivement disponible sur le véhicule, sans qu'il soit nécessaire de procéder à un démontage du moteur où de disposer d'un banc d'essai onéreux.

Selon l'invention, on installe à bord du véhicule un capteur de la vitesse instantanée du véhicule et on enregistre une succession de vitesses instantanées lors d'un essai effectué dans des conditions particulières qui seront explicitées plus loin.

Le signal de base 1 du capteur de vitesse instantanée est constitué par une succession d'impulsions 11, le nombre d'impulsions délivrées étant constant par tour de roue.

Ce signal de base 1 peut être obtenu par un capteur placé sur une roue, un arbre de transmission, sur le pont, l'arbre de sortie de boîte ou un pignon qui lui est solidaire, ou sur le câble du compteur de vitesse. Il importe seulement que le temps séparant deux impulsions successives corresponde à une distance fixe déterminée x parcourue par le véhicule.

L'étalonnage du capteur de vitesse se fait en mesurant soigneusement la distance parcourue par le véhicule pour n impulsions 11 du capteur.

On notera qu'une distance de l'ordre d'une dizaine de mètres suffit pour réaliser cet étalonnage de façon précise.

Une mise en forme électronique du signal 1 délivré par le capteur est indispensable de façon à obtenir des créneaux 11 de pente et d'amplitude stables.

Le signal de base 1 donne lieu, lors d'un essai réalisé à l'aide d'un véhicule à l'enregistrement d'informations relatives aux temps $t_1$, $t_2$, $t_3$ écoulés entre les impulsions successives 11 du signal de base. Deux options sont possibles suivant que l'on choisit d'embarquer ou non un ordinateur de traitement à bord du véhicule.

Si un ordinateur de traitement est embarqué, moyennant un interface adapté, le comptage des intervalles de temps $t_1$, $t_2$, $t_3$...entre les impulsions 11 est fait directement par l'ordinateur qui stocke au fur et à mesure les données ainsi acquises.

Si aucun ordinateur de traitement n'est embarqué dans le véhicule, le stockage des impulsions 11 peut se faire facilement sur un appareil enregistreur tel qu'un appareil minicassette stéréophonique standard auquel sont ajoutés quelques circuits électroniques permettant d'enregistrer sur l'une des voies les créneaux 11 mis en forme, dont le niveau est rendu compatible avec la sensibilité de l'entrée utilisée, et sur l'autre voie les signaux 2 d'une horloge de référence, qui permettent de s'affranchir des fluctuations éventuelles de la vitesse de défilement de la bande (voir figure 1).

Les données ainsi stockées sont ensuite relues par le même appareil convenablement interfacé avec l'ordinateur de traitement, afin de déterminer les intervalles de temps $t_1$, $t_2$, $t_3$...

Le comptage du nombre d'impulsions d'horloge 2 entre deux impulsions 11 du capteur (fig 1) fournit, compte tenu de l'étalonnage, des valeurs brutes de vitesse de translation du véhicule en fonction du temps (fig 2).

Selon l'invention, on effectue l'enregistrement des signaux permettant de déterminer ensuite les vitesses instantanées du véhicule au cours d'essais d'accélération du véhicule effectués dans des conditions prédéterminées, c'est-à-dire sur une route à pente constante et avec un vent à direction et vitesse constantes, les conditions les plus pratiques étant naturellement une route horizontale et un vent nul.

Les essais d'accélération sont effectués chaque fois sur rapport de boîte de vitesse déterminé, accélérateur à fond depuis le régime minimal possible jusqu'au régime maximal autorisé pour le moteur. Afin de déterminer les efforts résistants, on continue d'enregistrer un signal représentatif des vitesses instantanées du véhicule pendant une phase de décélération qui suit la phase d'accélération. Pour provoquer la phase de décélération, une fois le véhicule lancé à pleine vitesse, on laisse décroître, au point mort, la vitesse du véhicule de la vitesse maximale atteinte à une vitesse nulle. La loi de décélération du véhicule sous l'effet des efforts résistants peut ensuite être déduite de l'enregistrement des vitesses instantanées dans la phase de décélération. La pente de la route et le vent doivent naturellement être identiques à la pente de la route et au vent intervenant pour la phase d'accélération.

Il est préférable de réaliser plusieurs essais d'accélération-décélération successifs avec différents rapports de boîte de vitesse, comme cela sera indiqué plus loin.

La détermination de la puissance du véhicule et du couple moteur à partir des essais d'accélération-décélération implique de connaître les termes d'inertie relatifs au véhicule.

Ces inerties intervenant sur les phases d'accélération et de décélération se décomposent en trois parties :

Masse du véhicule. Elle se détermine aisément par pesée ou en ajoutant à la masse à vide fournie par le constructeur, celle du pilote et du combustible embarqué.

Moment d'inertie des roues et de la transmission : il intervient de façon constante par rapport à la vitesse du véhicule par l'intermédiaire du développement de roue et du rapport de pont.

Moment d'inertie des pièces tournantes du moteur (volant, villebrequin, etc.) : il intervient de façon variable suivant le rapport de boîte utilisé, et n'intervient pas lors des essais en décélération effectués au point mort.

Le principe de calcul de la puissance et du couple moteur sera maintenant exposé ci-après.

Les enregistrements effectués : temps écoulé $t_1$, $t_2$, $t_3$, entre deux impulsions 11, pour parcourir une distance connue x, permettent, moyennant des précautions de filtrage et de lissage numérique qui seront précisées plus loin, de calculer la vitesse et l'accélération instantanée du véhicule.

Le traitement de l'essai ralentissement du véhicule en roue libre permet de connaître en fonction de sa vitesse l'effort résistant qui lui est appliqué.

Cet effort résistant étant déterminé, le traitement d'un essai d'accélération permet de connaître l'effort moteur disponible aux roues, à une erreur près due aux moments d'inertie des roues et du moteur.

A partir de trois essais effectués sur trois rapports de boîte différents, une méthode d'itération-convergence permet de déterminer ces deux moments d'inertie et d'accéder à la puissance ou au couple réellement disponible aux roues, en fonction du régime moteur.

Le traitement des signaux enregistrés lors des essais d'accélération-décélération et permettant de déduire la puissance effectivement transmise au véhicule par le moteur ainsi que le couple en fonction du régime moteur sera explicité ci-dessous en référence aux figures 2 à 6 et 7A à 7c.

La courbe 110 des vitesses instantanées en fonction du temps, telle qu'elle peut être établie à partir des mesures d'intervalles de temps successifs $t_1$, $t_2$, $t_3$ correspondant à des distances parcourues successives identiques, est représentée sur la figure 2. Cette courbe, bien que présentant quelques fluctuations dues aux conditions d'enregistrement des signaux en cours d'essai, se divise nettement en une première partie ascendante 111 correspondant à la phase d'accélération et une seconde partie descendante 112 correspondant à la phase de décélération, lesquelles parties ascendante 111 et descendante 112 définissent un pic 113.

Pour les divers calculs devant être effectués à partir des informations de vitesses instantanées, il convient d'identifier sur la courbe 110 le début et la fin de chaque phase d'essai,c'est-à-dire la phase d'accélération et la phase en roue libre. Comme on le voit sur la figure 2, la pointe 113 de la courbe 110 correspond à des informations relativement imprécises compte tenu de la phase transitoire qui correspond au relâchement de l'accélérateur. Il est ainsi nécessaire de ne pas tenir compte de la fin de la partie ascendante 111, ni du début de la partie descendante 112 et de supprimer la partie de la courbe 110 correspondant au pic 113 (interruption 114 de la courbe 110 sur la figure 3).

Le début et la fin de chaque phase d'essai peuvent être identifiés individuellement par l'opérateur à l'aide d'un curseur graphique ou numérique existant sur l'écran de visualisation ou la table traçante.

L'identification peut aussi se faire automatiquement en déclarant préalablement les régimes moteur minimum et maximum utilisés sur la série d'essais.

Par ailleurs, les parasites éventuels et le bruit numérique d'échantillonnage interdisent de réaliser directement par le calcul une dérivation de la courbe 110 de la figure 3 pour connaître l'accélération. Des filtrages et lissages préliminaires sont nécessaires.

La phase de filtrage et lissage numériques du signal de vitesse est particulièrement délicate et importante. En effet, un filtrage insuffisant laisse un bruit trop important pour que l'accélération calculée soit utilisable. Un filtrage et un lissage excessifs suppriment une partie importante de l'information, ce qui peut fausser les calculs ultérieurs.

Une première atténuation du bruit peut se faire par un lissage numérique passe-bas. La valeur d'un point est remplacée par une moyenne pondérée ou non de ce point et des 2, 4, ou 6 points qui l'encadrent.

Parmi les méthodes de lissage numériques disponibles, il est intéressant de choisir la méthode consistant à effectuer un lissage polynomial par tronçons avec raccordement de dérivées grâce à des éléments cubiques de haute précision de type Hermite.

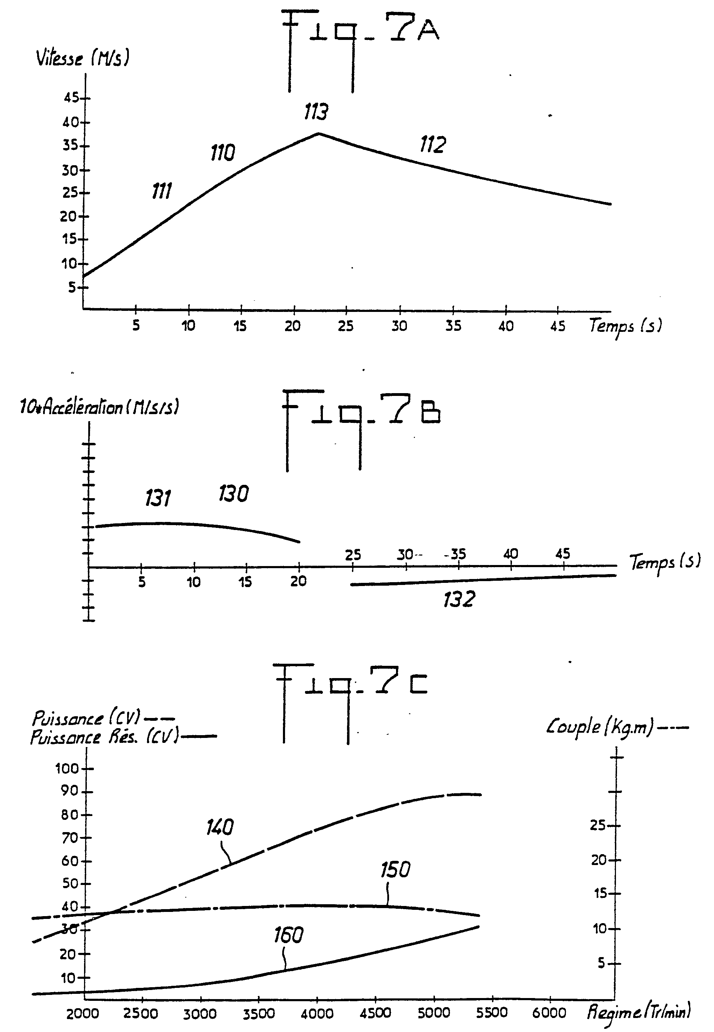

La définition du nombre et de la longueur des segments peut être fixée une fois pour toutes ou être autoadaptative en fonction de la durée et de la forme du signal à traiter. Les lois de vitesse en fonction du temps, ainsi lissées correspondent à la courbe 120 de la figure 4 avec une partie ascendante 121 et une partie descendante 122. L'accélération instantanée du véhicule peut alors être calculée de façon précise à partir des courbes 121, 122 de la figure 4 pour permettre l'établissement de la courbe 130 de la figure 5 qui comprend une première partie 131 donnant l'accélération en fonction du temps pour la phase d'accélération et une deuxième partie 132 donnant l'accélération en fonction du temps pour la phase de décélération.

Pour une vitesse donnée, la loi de décélération donne l'effort résistant correspondant. L'accélération mesurée à la même vitesse permet par différence de connaître la puissance effectivement transmise au véhicule, sous réserve que les termes d'inertie soient connus. Or,

La masse du véhicule est connue par pesée, l'inertie des roues et de la transmission peut être estimée d'après la taille des pneumatiques et le poids des roues,

l'inertie du moteur peut être estimée d'après sa cylindrée.

Si l'on souhaite une meilleure précision, on peut affiner automatiquement l'estimation de ces deux derniers termes d'inertie par une méthode d'itération minimisant des écarts de puissance obtenus au même régime sur des rapports de boîte de vitesse différents, par exemple trois rapports de boîte de vitesse différents.

On dispose alors pour chaque régime moteur de trois enregistrements effectués sur trois rapports de boîte différents, ce qui permet de définir pour chaque régime moteur un système de trois équations à trois inconnues : la puissance du moteur au régime considéré, l'inertie en rotation du moteur, l'inertie en rotation des roues et de la transmission.

La stabilité des deux inerties calculée à chaque régime donne une garantie de cohérence et des calculs. En réinjectant dans les calculs la moyenne des valeurs ainsi déterminées pour ces deux inerties, on obtient une précision accrue sur la puissance calculée.

Suivant le type de calculateur utilisé, les courbes de couple 150 et de puissance 140 en fonction du régime, dont l'allure est représentée sur la figure 6, peuvent être visualisées sur écran ou sur imprimante point par point ou sur une table traçante avec ou sans impression des valeurs numériques correspondantes.

Sur les figures 7A,7B,7C on a représenté les courbes 110, 130, 140, 150 des figures 2, 5 et 6 en dilatant l'échelle des temps et on a en outre fait apparaître sur la figure 7c la courbe 160 donnant la puissance résistive en fonction du temps.

On notera que le procédé selon l'invention permet, avec un appareillage très simple de connaître, d'une part, le couple et la puissance du moteur, d'autre part, l'effort résistant du véhicule.

Cet appareillage peut donc être utile pour mesurer l'effet de modifications effectuées sur un moteur, sans nécessiter l'utilisation coûteuse d'un banc d'essai à rouleaux ou d'un banc d'essai moteur.

Cet appareillage permet aussi de mesurer l'effet d'améliorations du comportement aérodynamique ou de la résistance au roulement du véhicule.

**Revendications**

1. Procédé de mesure selon lequel on place le véhicule sur une route dans des conditions atmosphériques stables, on fait passer le véhicule d'une position de vitesse minimale à une position de vitesse maximale, lors d'une phase dite d'accélération, en actionnant à fond la commande d'accélérateur pour faire passer le moteur d'un régime minimal possible à un régime maximal autorisé, on interrompt l'actionnement de la commande d'accélérateur lorsque ledit régime maximal autorisé a été atteint, tout en plaçant la boîte de vitesse au point mort et on laisse décroître la vitesse du véhicule en roue libre jusqu'à l'arrêt du véhicule lors d'une phase dite de décélération, caractérisé en ce que le procédé, permettant d'obtenir la puissance disponible à bord d'un véhicule automobile consiste, pour au moins un rapport de vitesse donné, à :

mesurer en permanence pendant la marche du véhicule, à l'aide d'un capteur embarqué dans le véhicule, la vitesse instantanée du véhicule, de manière à établir la courbe des vitesses instantanées mesurées,

procéder à un filtrage et à un lissage numériques des différentes valeurs instantanées de vitesses mesurées, de manière à obtenir une courbe lissée de vitesse en fonction du temps,

déduire de la courbe lissée de vitesse les accélérations instantanées du véhicule pendant les phases d'accélération et de décélération pour permettre l'établissement de la courbe des accélérations instantanées,

déterminer pour chaque vitesse instantanée à partir de la courbe, des accélérations instantanées en phase de décélération, l'effort résistant appliqué au véhicule,

et, à partir de l'effort résistant déterminé précédemment, déduire de la courbe des accélérations instantanées en phase d'accélération, par différence et pour une vitesse donnée, la puissance effectivement transmise au véhicule par le moteur.

2. Procédé de mesure selon la revendication 1, caractérisé en ce que pour la mesure des vitesses instantanées, on élabore un signal de base constitué par une succession d'impulsions émises à des intervalles de temps correspondant chacun à une même distance élémentaire prédéterminée parcourue par le véhicule et on enregistre la durée des différents intervalles de temps successifs qui sont proportionnels aux vitesses instantanées du véhicule.

3. Procédé selon la revendication 2, caractérisé en ce que le signal de base est émis par un capteur étalonné placé sur le câble du compteur de vitesse du véhicule et est mis en forme pour délivrer des créneaux de pente et d'amplitude stables.

4. Procédé selon la revendication 2, caractérisé en ce que le signal de base est émis par un capteur étalonné placé dans le véhicule sur une roue, un arbre de transmission, le pont, l'arbre de sortie de boîte ou un pignon solidaire de cet arbre de sortie et est mis en forme pour délivrer des créneaux de pente et d'amplitude stables.

5. Procédé selon l'une quelconque des revendications 1 à 4, caractérisé en ce que, sur la courbe des vitesses instantanées mesurées, on procède à une identification du début et de la fin de la phase d'accélération correspondant, respectivement, à un régime moteur minimal retenu supérieur audit régime minimal possible et un régime moteur maximal retenu inférieur audit régime moteur maximal autorisé ayant donné lieu à la pointe de vitesse instantanée maximum et on procède à une identification du début et de la fin de la phase de décélération correspondant, respectivement, auxdits régimes moteurs maximal et minimal retenus.

6. Procédé selon la revendication 1, caractérisé en ce que l'opération de lissage numérique comprend un premier lissage numérique passe-bas selon lequel la valeur d'un point donné est remplacée par une moyenne pondérée ou non de ce point et d'un nombre 2p de points qui l'encadrent, p étant un entier compris entre 1 et 3.

7. Procédé selon la revendication 1 ou 6, caractérisé en ce que l'opération de lissage numérique comprend un lissage polynomial par tronçons avec raccordement de dérivées grâce à des éléments cubiques de haute précision de type Hermite.

8. Procédé selon l'une quelconque des revendications 1 à 7, caractérisé en ce que les termes d'inertie du véhicule comprennent la masse du véhicule déterminée par la pesée, le moment d'inertie des roues et de la transmission estimé d'après la taille des pneumatiques et la masse des roues et le moment d'inertie des pièces tournantes du moteur estimé d'après la cylindrée du moteur.

9. Procédé selon l'une quelconque des revendications 3 à 8 rendues dépendantes de la revendication 2, caractérisé en ce que la détermination du moment d'inertie des roues et de la transmission et du moment d'inertie des pièces tournantes du moteur est effectuée à partir de résultats d'essais correspondant à plusieurs mises en oeuvre successives du procédé pour le même véhicule dans des conditions identiques mais avec chaque fois un rapport de vitesse différent, l'estimation lesdits moments d'inertie étant effectuée par une méthode d'itération minimisant les écarts de puissance obtenus au même régime sur des rapports de boîte de vitesse différents.

10. Procédé selon la revendication 2 ou l'une quelconque des revendications 3 à 9 rendues dépendantes de la revendication 2, caractérisé en ce que l'on applique le signal de base constitué par une succession d'impulsions directement à une interface reliée à un ordinateur embarqué dans le véhicule et en ce que le comptage des intervalles de temps entre les impulsions successives est fait directement par l'ordinateur qui stoke au fur et à mesure les données ainsi acquises.

11. Procédé selon la revendication 2 ou l'une quelconque des revendications 3 à 11 rendues dépendantes de la revendication 2, caractérisé en ce que l'on enregistre sur l'une des voies d'un appareil d'enregistrement et de lecture stéréophonique standard à bande magnétique ou à cassette, le signal de base constitué par une succession d'impulsions mises en forme et présentant un niveau adapté à la sensibilité de l'entrée dudit appareil, en ce que l'on enregistre sur l'autre voie de l'appareil d'enregistrement les signaux d'une horloge de référence et en ce que les données ainsi stockées sont ensuite relues après la fin de l'essai à bord du véhicule, à l'aide du même appareil d'enregistrement et de lecture stéréophonique, pour être appliquées, par l'intermédiaire d'une interface, à un ordinateur de traitement non embarqué dans le véhicule à tester.

## Claims

1. Measuring method consisting in placing the vehicle on a road in stable atmospheric conditions, bringing the vehicle from a minimum speed position to a maximum speed position, during a phase called acceleration phase, by actuating fully the accelerator control in order to cause the engine to pass from a possible minimum speed to an authorized maximum speed, discontinuing the actuation of the accelerator control when said authorized maximum speed is reached, while placing the gearbox in neutral, and allowing the speed of the vehicle to decrease while said vehicle is out of gear, until said vehicle stops during a phase called deceleration phase, characterized in that the process, with the power available on board of a motor vehicle can be obtained, consists for at least a given speed ratio, in :

measuring permanently the vehicle instant speed, while said vehicle is running, with a sensor fitted inside the vehicle, so as to determine the curve of the measured instantaneous speeds,

proceeding to a digital filtering and smoothing of the different instantaneous speed values measured, so as to obtain a smoothed curve of speed as a function of time,

deducing from the smoothed curve of speed, the instantaneous accelerations of the vehicle during the acceleration and deceleration phases in order to determine the curve of instantaneous accelerations,

determining for each instant speed, from the curve of instantaneous accelerations during deceleration phases, the resisting force applied to the vehicle,

and starting from the previously determined force, deducing from the curve of instantaneous accelerations in acceleration phase, by difference and for a given speed, the power effectively transmitted to the vehicle by the engine.

2. Measuring method according to claim 1, characterized in that to measure instantaneous speeds, a base signal is produced, which base signal is composed of a sequence of pulses delivred at time intervals each of which corresponds to the same preset elementary distance travelled by the vehicle, and the duration of the various successive time intervals is recorded, said time intervals being proportional to the instantaneous speeds of the vehicle.

3. Method according to claim 2, characterized in that the base signal is delivered by a calibrated sensor placed on the cable of the vehicle speedometer and is shaped in order to deliver strobes of stable gradient and amplitude.

4. Method according to claim 2, characterized in that the base signal is delivered by a calibrated sensor placed in the vehicle on a wheel, a transmission shait, the axle, the secondary output shaft, or a pinion fast with said output shaft and is shaped to an to deliver strobes of stable gradient and amplitude.

5. Method according to any one of claims 1 to 4, characterized in that it consists on the curve of measured instantaneous speeds in identifying the beginning and end of the acceleration phase which corresponds respectively to an acceptable minimum engine speed higher than said possible minimum speed and an acceptable maximum engine speed lower than said authorized maximum engine speed which has caused the maximum instantaneous speed surge and in identifying the beginning and end of the deceleration phase which corresponds, respectively, to said acceptable maximum and minimum engine speeds.

6. Method according to claim 1, characterized in that the digital smoothing operation comprises a first low-pass digital smoothing whereby the value of a given point is replaced by a weighted or unweighted average of said point and of a number 2p of points around it, p being an integer between 1 and 3.

7. Method according to claim 1 or 6, characterized in that the digital smoothing operation comprises a polynomial smoothing by sections with joining up of derivatives owing to high precision cubic elements of Hermite type.

8. Method according to any one of claims 1 to 7, characterized in that the terms of engine inertia include the vehicle mass determined by weighing, the moment of inertia of the wheels and the transmission estimated from the size of the tires and the mass of the wheels and the moment of inertia of the engine rotary parts estimated from the engine cubic capacity.

9. Method according to any one of claims 3 to 8, made to depend of claim 2, characterized in that the moment of inertia of the wheels and of the transmission, and the moment of inertia of the engine rotary parts are determined from test results corresponding to several successive implementations of the method for the same vehicle in identical conditions but each time a different gear box ratio, said moments of inertia being estimated by way of an iterating method minimizing the differences of power obtained at the same speed on different gear box ratios.

10. Method according to claim 2 or any one of claims 3 to 9, made to depend of claim 2, characterized in that the base signal constituted by a pulse sequence is applied directly to an interface connected to a computer on-board the vehicle and in that the time intervals between the successive pulses are counted directly by the computer storing the data as and when it receives it.

11. Method according to claim 2 or any one of claims 3 to 11 made to depend of claim 2, characterized in that it consists in recording on one of the tracks of a conventional stereophonic recording and reading apparatus with magnetic tape or cassette, the basic signal constituted by a sequence of shaped pulses of level adapted to the response of the input of said apparatus, in that the signals of a reference clock are recorded on the other track of the apparatus, and in that the resulting stored data is thereafter read after the end of the test on-board the vehicle, using the same stereophonic recording and reading apparatus, in order to be applied, via an interface to a processing computer which is not on-board the vehicle to be tested.

**Patentansprüche**

1. Meßverfahren nach dem das Fahrzeug auf eine Straße unter stabilen Umgebungsbedingungen gestellt wird, das Fahrzeug von einer minimalen Geschwindigkeitsposition auf eine maximale Geschwindigkeitsposition bei einer Phase genannt Beschleunigung gebracht wird, unter Betätigung der Beschleunigungsbetätigung bis zum Anschlag um den Motor aus einem minimal möglichen Betriebszustand auf einen maximal erlaubten Betriebszustand zu bringen, der Betrieb des Beschleunigungsbetätigers unterbrochen wird, wenn der maximal erlaubte Betriebszustand erreicht wurde, während das Getriebe in den Totpunkt gesetzt ist und Abnehmenlassen der Fahrzeuggeschwindigkeit bei freiem Rad bis zum Anhalten des Fahrzeugs bei einer Phase, genannt Verzögerung, dadurch gekennzeichnet, daß das Verfahren, das erlaubt, die verfügbare Leistung an Bord eines Kraftfahrzeugs zu erhalten, für wenigstens ein gegebenens Geschwindigkeitsverhältnis besteht aus :

ständigem Messen der Momentangeschwindigkeit des Fahrzeugs während des Fahrens des Fahrzeugs mit Hilfe eines Aufnehmers, der in dem Fahrzeug angebracht ist, derart, um die Kurve der gemessenen momentanen Geschwindigkeiten zu erzeugen,

Verarbeiten der verschiedenen momentanen gemessenen Geschwindigkeitswerte in einem Filter und einer numerischem Glättung derart, um eine geglättete Geschwindigkeitskurve in Abhängigkeit der Zeit zu erhalten,

Ableiten der momentanen Beschleunigungen des Fahrzeugs während der Beschleunigungs- und Verzögerungsphasen von der geglätteten Geschwindigkeitskurve, um die Kurve der momentanen Beschleunigungen aufzustellen,

Bestimmen für jede momentane Geschwindigkeit ausgehend von der Kurve der momentanen Beschleunigung in der Phase der Verzögerungen, der auf das Fahrzeug ausgeübten Widerstandskraft, und

ausgehend von der vorhergehend bestimmten Widerstandskraft, Ableiten von der Kurve die Momentanbeschleunigungen in der Phase der Beschleunigung durch Differenzieren, und für eine vorgegebene Geschwindigkeit, der effektiven auf das Fahrzeug durch den Motor übertragenen Leistung.

2. Meßverfahren nach Anspruch 1, dadurch gekennzeichnet, daß für die Messung der Momentgeschwindigkeiten ein Basissignal verarbeitet wird, daß durch eine Aufeinanderfolge von Impulsen gebidet wird, die in Zeitintervallen ausgegeben werden, welches jedes einer selben vorbestimmten elementaren Distanz entspricht, die von dem Fahrzeug durchlaufen wird und die Dauer der unterschiedlichen aufeinanderfolgenden Zeitintervalle gespeichert wird, die proportional zu den momentanen Geschwindigkeiten des Fahrzeugs sind.

3. Verfahren nach Anspruch 2, dadurch gekennzeichnet, daß das Basissignal durch einen geeichten Aufnehmer ausgeben wird, der auf dem Kabel des Fahrzeuggeschwindigkeitszählers angeordnet ist, und in Form gebracht wird, um steile bzw. schräge Auftaktimpulse mit stabilen Amplituden zu liefern.

4. Verfahren nach Anspruch 2, dadurch gekennzeichnet, daß das Basissignal durch einen geeichten Aufnehmer ausgegeben wird, der in dem Fahrzeug auf einem Rad, einer Getriebewelle, der Brücke, der Ausgangswelle des Gehäuses oder einem mit der Ausgangswelle verbundenen Ritzel angeordnet ist und in Form gebracht wird, um steile bzw. schräge Auftaktsignale mit stabilen Amplituden zu liefern.

5. Verfahren nach einem der Ansprüche 1 bis 4, dadurch gekennzeichnet, daß auf der Kurve der gemessenen momentanen Geschwindigkeiten eine Identifikation des Anfangs und des Endes der Beschleunigungsphase entsprechend jeweils einem minimalen Motorbetrieb, der oberhalb des möglichen minimalen Betriebs gehalten wird und einem maximalen Motorbetrieb, der unterhalb des maximal erlaubten Motorbetriebs gehalten wird, vorgenommen wird, der im maximalen momentanen Geschwindigkeitspunkt bewirkt wird, und eine Identifikation des Anfangs und des Endes der Verzögerungsphase vorgenommen wird, die den maximalen und minimalen erhaltenen Motorbetriebsweisen jeweils entsprechen.

6. Verfahren nach Anspruch 1, dadurch gekennzeichnet, daß der Vorgang der numerischen Glättung eine erste numerische tiefe Glättung aufweist, gemäß der der Wert eines vorgegebenen Punktes durch einen gewichteten oder nicht gewichteten Mittelwert dieses Punktes und einer Zahl 2p von Punkten ersetzt wird, die ihn einrahmen, wobei p eine ganze Zahl ist zwischen 1 und 3.

7. Verfahren nach Anspruch 1 oder 6, dadurch gekennzeichnet, daß der Vorgang der numerischen Glättung eine abschnittsweise polynomische Glättung mit Verbindungsherstellung von Ableitungen aufweist, dank der kubischen Elemente von hoher Präzision vom Typ Hermite.

8. Verfahren nach einem der Ansprüche 1 bis 7, dadurch gekennzeichnet, daß die Trägheitswerte des Fahrzeugs die Fahrzeugmasse, bestimmt durch das Gewicht, das Trägheitsmoment der Räder und des Getriebes geschätzt nach der Größe der Luftreifen und der Rädermasse und das Trägheitsmoment der drehenden Teile des Motors geschätzt nach der Zylinderanzahl des Motors, umfaßt.

9. Verfahren nach einem der Ansprüche 3 bis 8, abhängig vom Anspruch 2, dadurch gekennzeichnet, daß die Bestimmung des Trägheitsmoments der Räder und des Getriebes und des Trägheitsmoments der drehenden Teile des Motors ausgeführt wird ausgehend von Versuchsresultaten entsprechend mehrerer aufeinanderfolgender Durchführungen des Verfahrens für das gleiche Fahrzeug unter identischen Bedingungen, jedoch mit jedesmal einem unterschiedlichem Getriebeverhältnis, wobei die Schätzung der Trägheitsmomente durch eine Iterationsmethode durchgeführt wird, die die bei selber Betriebsweise erhaltenen Leistungsunterschiede minimiert bezüglich der unterschiedlichen Getriebeverhältnisse.

10. Verfahren nach Anspruch 2 oder einem der Ansprüche 3 bis 9, abhängig von dem Anspruch 2, dadurch gekennzeichnet, daß das Basissignal, das durch eine Aufeinanderfolge von Impulsen gebildet ist, direkt auf ein mit einem in dem Fahrzeug vorhandenen Rechner verbundenes Interface aufgebracht wird, und daß die Zählung der Zeitintervalle zwischen den aufeinanderfolgenden Impulsen direkt durch den Rechner erfolgt, der die so erhaltenen Daten entsprechend speichert.

11. Verfahren nach Anspruch 2 oder einem der Ansprüche 3 bis 11, abhängig vom Anspruch 2, dadurch gekennzeichnet, daß auf einer der Spuren eines standartisierten Stereo-Aufnahme und-Wiedergabegeräts mit Magnetband oder Kassette das Basissignal aufgenommen wird, das aus einer Aufeinanderfolge von Impulsen gebildet ist, die geformt sind und eine an die Sensibilität des Geräteeingangs angepaßte Höhe aufweisen, daß auf der anderen Spur des Aufnahmegeräts die Signale einer Referenzuhr bzw. eines Referenztaktes aufgenommen werden und daß die so gespeicherten Daten danach erneut nach dem Ende des Versuchs an Bord des Fahrzeugs mit Hilfe desselben Aufnahme-und Wiedergabe-Stereogeräts gelesen werden, um über ein Interface einem Verarbeitungsrechner zugeführt zu werden, der nicht in dem zu untersuchenden Fahrzeug angebracht ist.

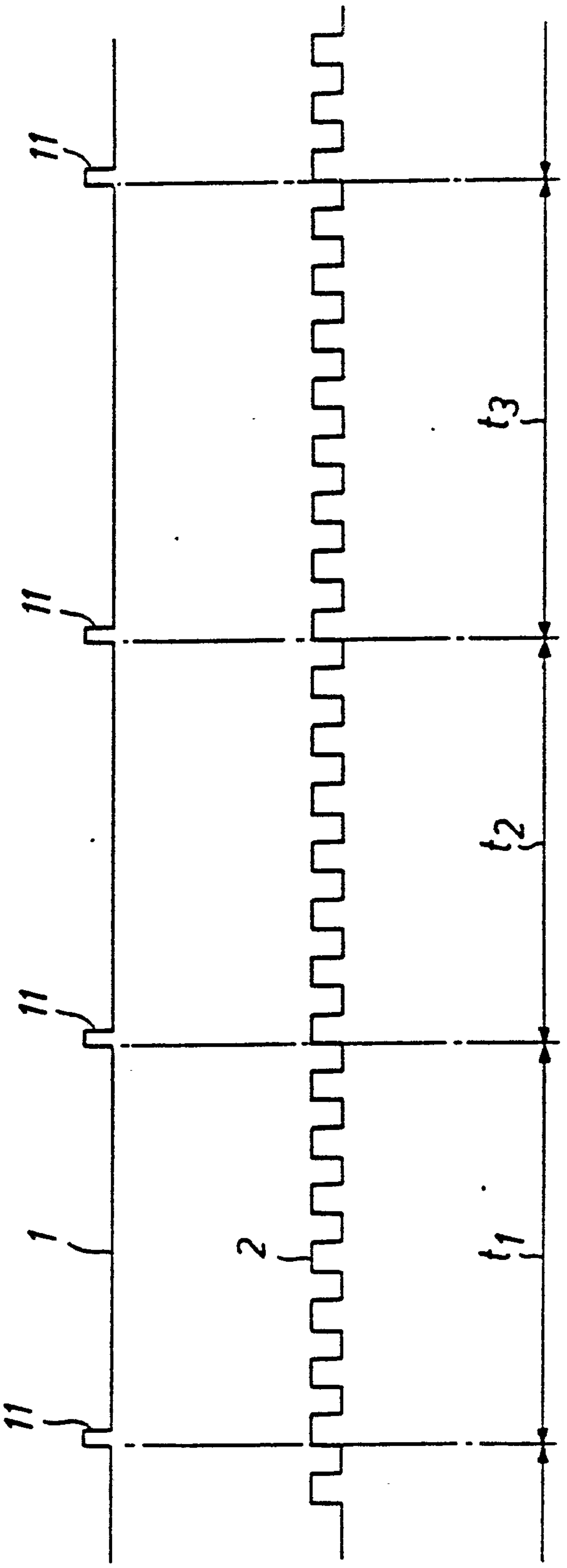


Fig. 1

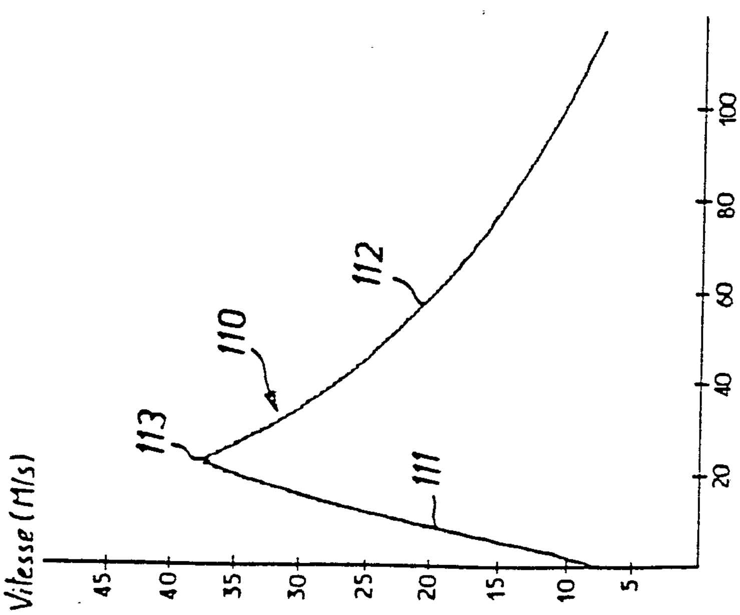


Fig-2

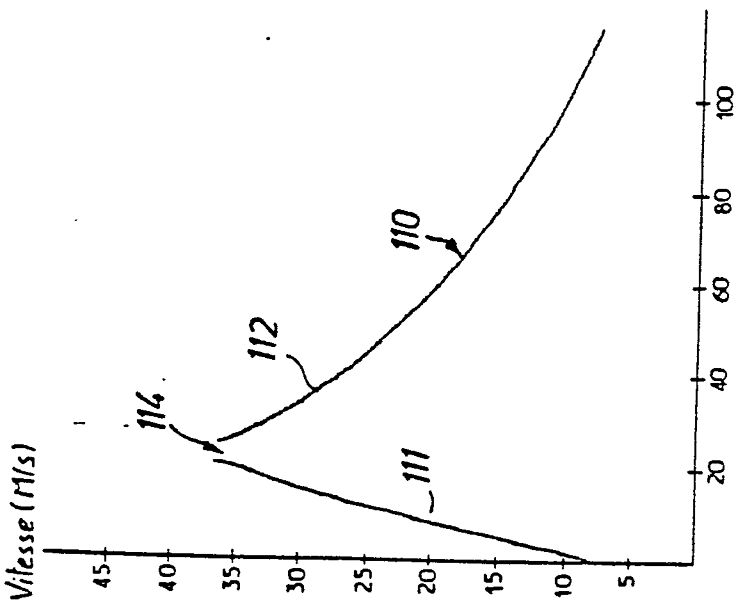


Fig-3

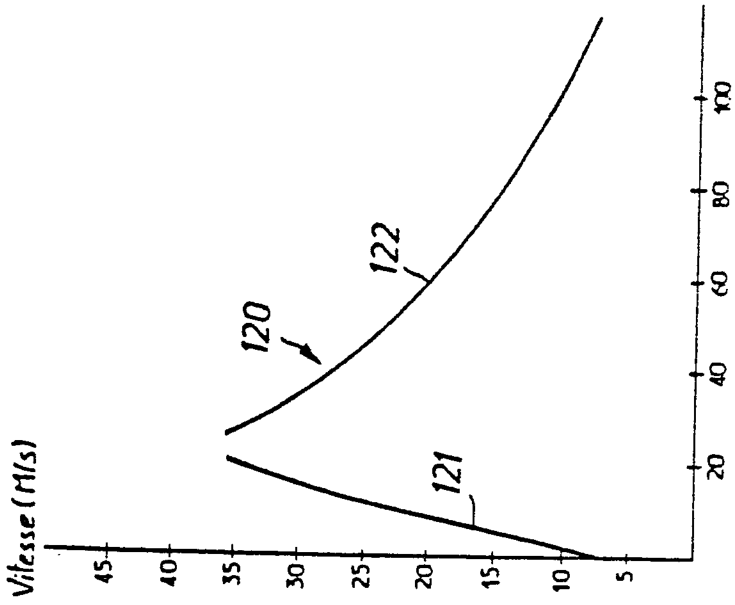


Fig-4

Fig.5

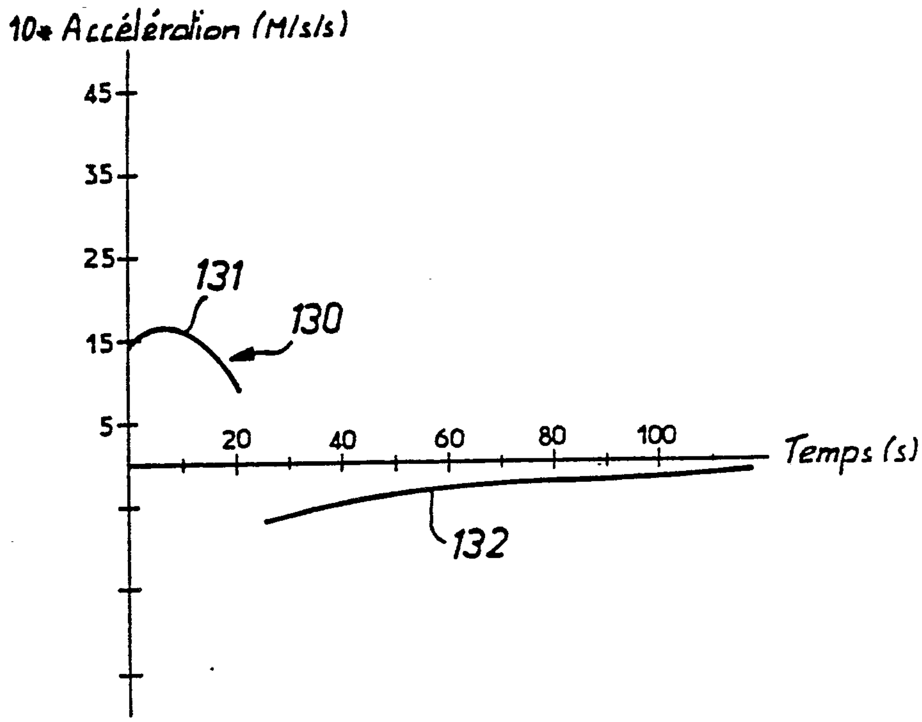
10* Accélération (M/s/s)
45
35
25
15
5
131
130
20
40
60
80
100
Temps (s)
132

Fig.6

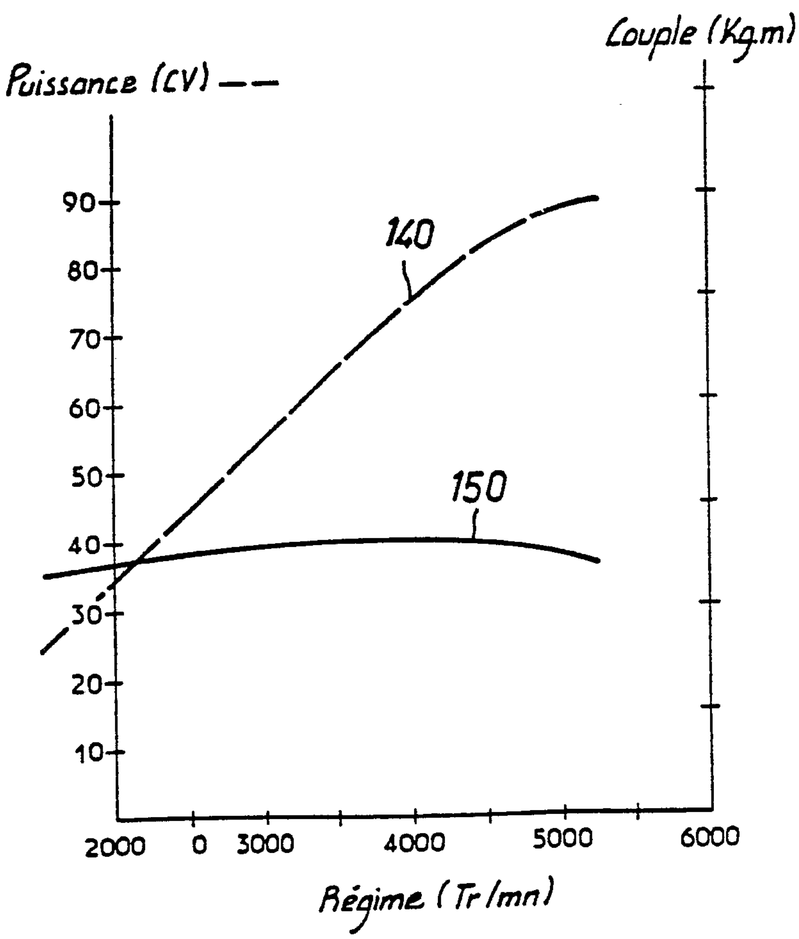
Couple (Kg.m)
Puissance (CV) --
90
80
70
60
50
40
30
20
10
140
150
2000
0
3000
4000
5000
6000
Régime (Tr/mn)

Fig. 7A

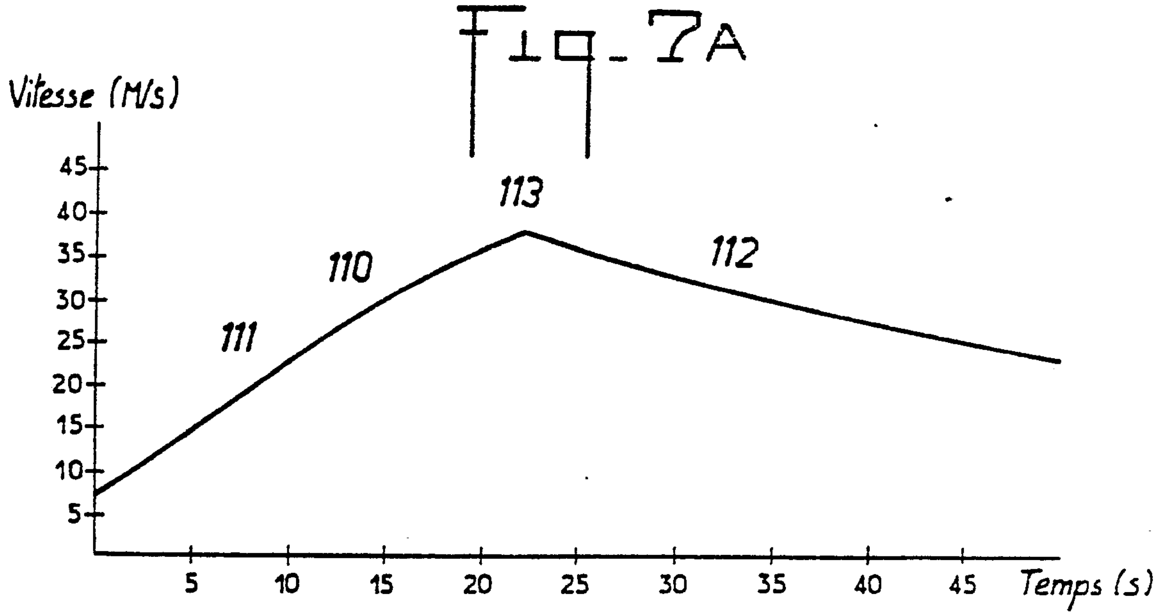


Fig. 7B

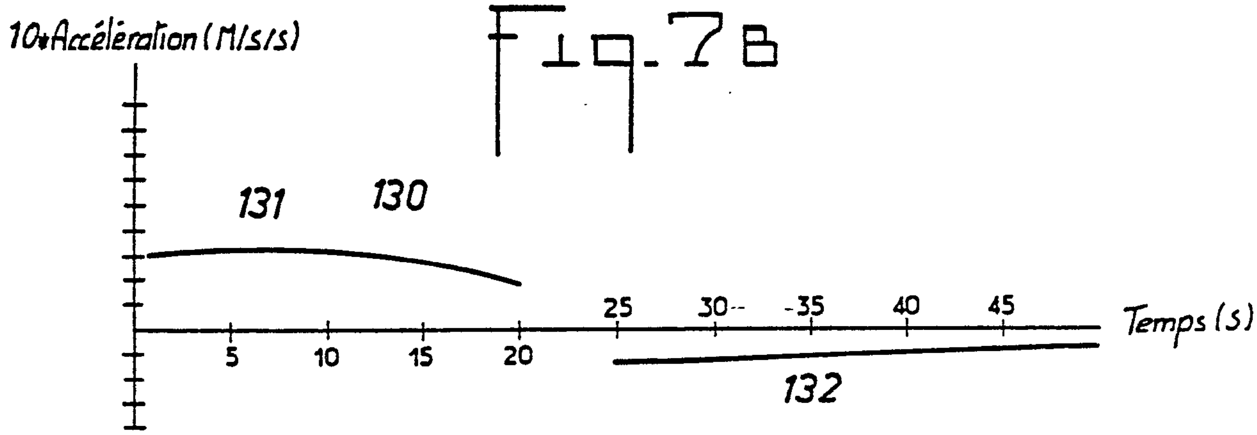


Fig. 7C